**Europäisches Patentamt**

(19) **European Patent Office**

**Office européen des brevets**

(11) Numéro de publication: **0 034 967**
**B1**

(12) # FASCICULE DE BREVET EUROPEEN

(45) Date de publication du fascicule du brevet:
**27.06.84**

(51) Int. Cl.³: **B 23 K 9/02**, G 05 B 19/42

(21) Numéro de dépôt: **81400205.1**

(22) Date de dépôt: **10.02.81**

(54) **Procédé automatique et auto-adaptatif de soudage par fusion et dispositif pour la mise en oeuvre de ce procédé.**

(30) Priorité: **13.02.80 FR 8003152**

(43) Date de publication de la demande:
**02.09.81 Bulletin 81/35**

(45) Mention de la délivrance du brevet:
**27.06.84 Bulletin 84/26**

(84) Etats contractants désignés:
**BE CH DE GB IT LI SE**

(56) Documents cités:
**EP - A - 0 017 167**
**FR - A - 2 397 916**
**GB - A - 946 990**
**GB - A - 1 078 240**
**AUTOMATIC WELDING, vol. 26, no. 9, septembre 1973, CAMBRIDGE (GB) E. GLADKOV et al.: "A device for guiding the electrode around a curvilinear butt joint during arc welding", pages 60-62**
**AUTOMATIC WELDING, vol. 29, no. 12, décembre 1976, CAMBRIDGE (GB) G.A. SPYNU et al.: "A digital control system with tracking programming for guiding electrodes along joints", pages 26 et 27**
**Le dossier contient des informations techniques présentées postérieurement au dépôt de la demande et ne figurant pas dans le présent fascicule.**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Cornu, Jean, 34, route de Verton, F-44200 Nantes (FR)**
Inventeur: **Detriche, Jean-Marie, 6, Bois de la Ferme, F-78240 Chambourcy (FR)**
Inventeur: **Tiret, Bernard, 52, Avenue J. Ferry, F-55100 Verdun (FR)**
Inventeur: **Galera, Richard, 16, rue Gabriel Péri, F-38000 Grenoble (FR)**
Inventeur: **Blava, Dominique, 69, rue Trosy, F-92140 Clamart (FR)**
Inventeur: **Marchal, Paul, 1-13, Résidence du Parc du Château de Courcelles, F-91190 Gif-sur-Yvette (FR)**

(74) Mandataire: **Mongrédien, André et al, c/o BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention concerne un procédé de soudage automatique et autoadaptatif de soudage par fusion, ainsi qu'un dispositif permettant la mise en oeuvre de ce procédé.

On sait que le développement de la robotique correspond à un besoin industriel de moyens évolués, permettant d'augmenter la production, de réduire les contraintes d'organisation et de planification des fabrications, de réduire les investissements ainsi que les risques encourus par le personnel dans l'exécution de certains travaux dangereux.

Pour effectuer des soudures simples en permettant à une même machine de souder des pièces différentes, il est connu d'utiliser des dispositifs programmés de soudage, qui sont qualifiés de »robots industriels«. Cependant, leur programmation permet seulement de suivre une trajectoire dans l'espace lorsque la précision de soudage est compatible avec le positionnement, la tolérance et la déformation des pièces à souder. Il en résulte que ces dispositifs programmés ne sont généralement affectés qu'à des opérations de soudage sur des assemblages où la précision requise est faible et qui ne nécessitent pas des soudures de grande qualité. Ces dispositifs programmés remplacent dans certains cas des machines spécifiques, étudiées pour souder en série des pièces identiques.

De tels dispositifs sont décrits par exemple dans le brevet FR-A-2 397 916 et dans le brevet GB-A-1 078 240.

Les robots de soudage existants ne peuvent s'adapter aux déplacements aléatoires dépassant les faibles tolérances qui peuvent être obtenues grâce au procédé et au dispositif de l'invention.

Le procédé et le dispositif de l'invention ont pour but de remédier à ces inconvénients et notamment de réaliser une soudure avec une précision convenable; à cet effet, la torche de soudage est calée sur le joint, de façon suffisamment indépendante des écarts de position du porteur de torche, pour que ces écarts soient compensés à tout moment.

L'invention permet d'effectuer des travaux qui ne pourraient être réalisés que par un personnel très qualifié, ces travaux sont par exemple, l'assemblage d'un grand nombre d'éléments avec une grande précision sans possibilité de reprise ou d'erreur. L'invention permet également d'assurer une production intensive, impossible à obtenir d'un opérateur, en raison de la fatigue et de la contrainte physique qui en découle. Elle permet aussi de souder des pièces de grandes dimensions qui sont souvent préchauffées et que le soudeur ne peut approcher qu'en étant protégé, ce qui rend son travail extrêmement pénible dans des conditions parfois insalubres. Elle permet également d'effectuer des opérations de soudage à distance, avec une précision suffisante généralement inaccessible aux télémanipulateurs commandés par l'intermédiaire d'un circuit de télévision.

L'invention vise tout d'abord un procédé automatique et autoadaptatif de soudage d'un joint par fusion à l'aide d'une tête de soudage qui comprend un détecteur de joint et une torche et qui est supportée par un porteur mobile le long du joint, cette tête de soudage étant mobile, d'une part, en rotation autour d'un axe principal du porteur, cet axe étant sensiblement perpendiculaire au plan tangent aux surfaces à souder à l'endroit du joint et, d'autre part, mobile en translation le long de cet axe principal, la torche et le détecteur étant mobiles en rotation autour d'un axe secondaire lié à la tête et parallèle à l'axe principal, la torche pouvant passer par l'axe principal au cours de la rotation autour de l'axe secondaire, le détecteur étant en avance par rapport à la torche, durant le déplacement du porteur, ce procédé consistant à:

— à enregistrer, lors d'une opération d'apprentissage, préliminaire au soudage en série, pendant laquelle les axes précités ainsi que les axes de la torche et du détecteur sont dans un même plan, les positions successives de la projection de l'axe principal du porteur P, le long du joint, par rapport à un repère WXYZ,

— à déterminer pour chacune de ces positions, au cours de cette opération d'apprentissage la direction d'une droite de référence $\Delta$ définie par les deux points d'intersection de l'axe de la torche T et de l'axe du détecteur D' avec la trace du joint J sur les surfaces des pièces à assembler, et à enregistrer une tension électrique correspondant à la position angulaire $\Theta$ de cette direction de référence par rapport au repère WXYZ,

— à mesurer au cours du soudage et pour chaque position de l'axe principal OZ du porteur P, l'angle $\beta_D$ du détecteur, par rapport à la direction de la droite de référence $\Delta$, lorsque le détecteur est au-dessus du joint J,

— à corriger, au cours du soudage la position angulaire de la torche T', lorsque celle-ci vient occuper la position qu'avait précédemment le détecteur D', par un déplacement angulaire qui est fonction d'une part, de l'écart angulaire $\beta_D$ du détecteur D' par rapport à la droite de référence $\Delta$ correspondante en ce point du joint J et, d'autre part, de la vitesse de déplacement de la tête A sur sa trajectoire.

Selon une autre caractéristique de l'invention, la vitesse de déplacement du porteur est déterminée à partir de l'intensité du courant de soudage.

Selon une autre caractéristique, on asservit en permanence la hauteur de la torche au-dessus du joint, à la tension d'arc.

**0 034 967**

Selon une autre caractéristique, la hauteur de la torche par rapport au joint est réglée par une détection de proximité.

L'invention a aussi pour objet un dispositif automatique et autoadaptatif de soudage d'un joint par fusion, comprenant une tête de soudage munie d'une torche supportée par un porteur mobile le long du joint à souder, caractérisé en ce qu'il comprend un détecteur de joint faisant partie de la tête de soudage, cette tête étant, d'une part mobile en rotation autour d'un axe principal du porteur, cet axe étant sensiblement perpendiculaire au plan tangent aux surfaces à souder le long du joint, et d'autre part, mobile en translation le long de cet axe principal, le détecteur de joint et la torche étant mobiles en rotation autour d'un axe secondaire lié à la tête et parallèle à l'axe principal, la torche pouvant passer par l'axe principal au cours de sa rotation autour de l'axe secondaire et le détecteur étant en avance par rapport à la torche, durant le déplacement du porteur, des moyens reliés à la tête, à la torche et au détecteur pour mesurer et enregistrer durant une opération d'apprentissage pendant laquelle les axes précités ainsi que les axes de la torche et du détecteur sont dans un même plan, des tensions électriques correspondant aux positions successives de la projection de l'axe principal du porteur le long du joint, par rapport à un repère WXYZ.

Ces moyens de mesure et d'enregistrement étant ainsi adaptés à repérer pour chacune de ces positions, au cours de cette opération d'apprentissage la direction d'une droite de référence définie par les deux points d'intersection de l'axe de la torche et de l'axe du détecteur avec la trace du joint sur les surfaces des pièces à assembler, et à enregistrer une tension électrique correspondant à la position angulaire de cette direction de référence par rapport au repère WXYZ, puis à mesurer et enregistrer au cours du soudage et pour chaque position de l'axe principal du porteur, l'angle du détecteur, par rapport à la direction de la droite de référence lorsque le détecteur est au-dessus du joint et des moyens pour corriger, en cours de soudage, la position angulaire de la torche par rapport à sa droite de référence correspondante, lorsque la torche vient occuper la position qu'avait précédemment le détecteur le long du joint, cette correction étant un déplacement angulaire de la torche amenant celle-ci sur le joint, et étant fonction de la vitesse de déplacement de la tête sur sa trajectoire ainsi que de l'état angulaire du détecteur par rapport à la droite de référence.

Selon une autre caractéristique de l'invention, le dispositif comprend en outre des moyens pour faire tourner la tête autour de l'axe principal et pour la déplacer en translation suivant cet axe.

Selon une autre caractéristique, le dispositif comprend des moyens pour amener le détecteur au-dessus du joint, pendant l'opération d'apprentissage et au cours du soudage, par rotation autour de l'axe secondaire de la tête, et des moyens pour mesurer la position angulaire du détecteur par rapport à sa droite de référence.

Selon une autre caractéristique, les moyens pour corriger la position de la torche comprennent des moyens pour commander sa rotation autour de l'axe secondaire à partir des tensions correspondant aux positions du détecteur lorsqu'il est sur le joint et à partir de la vitesse de la tête sur sa trajectoire.

Selon une autre caractéristique particulière, la vitesse de la tête sur sa trajectoire est mesurée par des moyens de mesure du courant de soudage.

Selon une autre caractéristique, les moyens pour commander la rotation de la torche autour de l'axe secondaire sont asservis par les moyens de mesure de vitesse de déplacement du porteur.

Selon une autre caractéristique de l'invention, le système comprend en outre des moyens pour régler la hauteur d'arc de la torche.

Selon une autre caractéristique, les moyens pour régler la hauteur d'arc comprennent des moyens pour déplacer la tête en translation le long de l'axe principal, asservis par des moyens de mesure de la tension d'arc ou des moyens de détection de proximité.

Selon une autre caractéristique, le détecteur est un détecteur optique à balayage alternatif.

Selon une autre caractéristique, le détecteur est un détecteur à courants de Foucault à balayage alternatif.

Selon une autre caractéristique, le détecteur est un détecteur capable de se centrer sur le joint.

D'autres caractéristiques et avantages de l'invention ressortiront mieux de la description qui va suivre, donnée en référence aux dessins annexés, dans lesquels:

la fig. 1 représente de manière très schématique un dispositif automatique de soudage, conforme à l'invention,

la fig. 2 représente schématiquement en (a) et (b) le principe de correction des positions de la torche et du détecteur,

la fig. 3 représente les angles qui interviennent pour définir une direction de référence $\Delta$;

la fig. 4 représente les angles qui interviennent pour calculer l'angle de la direction de référence $\Delta$ par rapport à un axe lié au porteur;

la fig. 5 est un circuit de correction permettant d'obtenir la valeur de cet angle,

la fig. 6 représente les angles qui interviennent pour calculer de manière optimale l'angle de la direction de référence,

la fig. 7 illustre en (a) et (b) le principe de correction de la position de la torche en fonction de la vitesse d'avance du porteur,

la fig. 8 permet de calculer l'angle de correction de la position de la torche,

la fig. 9 représente, de manière plus détaillée, un dispositif automatique conforme à l'invention.

3

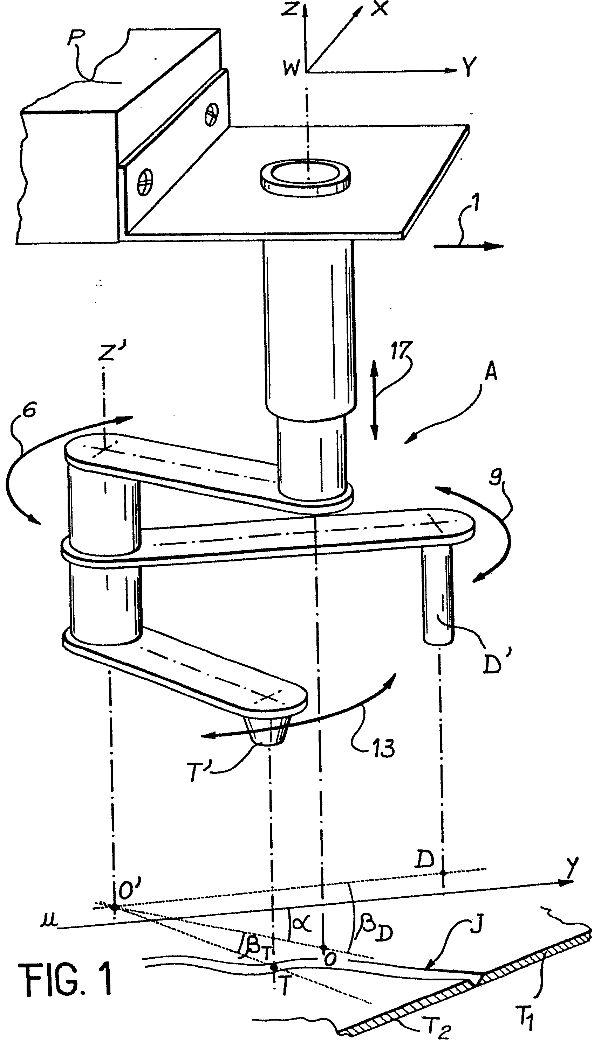

En référence à la fig. 1, on a représenté très schématiquement un dispositif automatique de soudage conforme à l'invention, et permettant le soudage d'un joint J entre deux surfaces $T_1$ et $T_2$ constituées par exemple par des tôles à souder. Ce système comprend un porteur P, mobile le long du joint à souder. Les positions du porteur sont repérées par rapport à un repère fixe de référence WXYZ, il supporte une tête de soudage A qui comprend une torche T', apte à produire un arc électrique, et un détecteur D' de type optique ou à courants de Foucault par exemple, qui permet de détecter la présence du joint à chaque fois que ce détecteur et ce joint se trouvent en regard l'un de l'autre. La tête de soudage A est mobile en rotation autour de l'axe principal OZ, lié au porteur P, et sensiblement perpendiculaire aux surfaces $T_1$ et $T_2$. Le détecteur D' et la torche T' sont mobiles en rotation autour d'un axe secondaire O'Z', parallèle à l'axe principal OZ. La disposition de la torche est telle qu'au cours de sa rotation autour de l'axe secondaire O'Z', cette torche passe par l'axe principal OZ. Durant le déplacement du porteur dans le sens de la flèche 1, par exemple, le détecteur est situé en avant de la torche. Le dispositif comprend aussi des moyens non représentés sur cette figure et qui seront décrits plus loin en détail, pour faire tourner la tête A autour de l'axe principal OZ dans l'un des sens indiqués par la double flèche 6, ainsi que des moyens permettant d'amener le détecteur D' au-dessus du joint J par rotations autour de l'axe secondaire O'Z'. Ces rotations constituent en fait des oscillations du détecteur autour de l'axe O'Z', selon les sens de la double flèche 9. De la même manière, des moyens qui seront décrits plus loin en détail permettent de commander la rotation de la torche T' autour de l'axe secondaire O'Z', dans l'un des sens indiqués par la double flèche 13, de manière à amener cette torche en regard du joint J. Enfin, des moyens qui seront décrits plus loin en détail permettent de déplacer la tête A en translation le long de l'axe principal OZ, selon l'un des sens de la double flèche 17.

Le porteur P mobilise la tête de soudage A, afin de lui faire parcourir le joint à souder. Ce porteur pourrait être par exemple, le bras esclave d'un télémanipulateur reproduisant avec une bonne précision tous les mouvements d'un bras maître. Chaque mouvement du porteur est assuré par un moteur électrique, auquel est associé un potentiomètre qui donne une information de position, par rapport au repère de référence WXYZ. Comme on le verra plus loin en détail, toutes les positions de la torche, de la tête et du détecteur sont repérées par des potentiomètres de manière qu'un angle de rotation se traduise par une variation de tension électrique, proportionnelle au déplacement angulaire. Le fonctionnement du dispositif repose sur le principe de l'apprentissage: à l'enregistrement, un opérateur effectue une première opération de soudage sur une pièce modèle. On enregistre, comme on le verra par la suite, les différents paramètres de cette opération, c'est-à-dire les tensions des potentiomètres de repérage des différents mouvements ainsi que les paramètres de soudage. A la restitution, les données enregistrées sont restituées pour reproduire l'opération de soudage sur une pièce identique à la pièce modèle. Cette opération peut être répétée autant de fois que nécessaire. Entre l'opération d'enregistrement et l'opération de restitution, des écarts interviennent, dus par exemple aux déformations des pièces, ce qui nécessite un recalage de la position de la torche. On verra par la suite, comment est effectué ce recalage. L'écart le plus important est celui qui apparaît entre le joint et la torche, au cours du soudage, car à l'extrémité de la torche, le joint n'existe plus et se trouve remplacé par un bain de métal en fusion. Dans cette situation, un soudeur professionnel utilise sa mémoire visuelle pour guider la torche. A l'aide du dispositif automatique de l'invention, ce sont les indications du détecteur de joints, situé à l'avant de la torche, qui permettent le guidage de cette torche. La tête est mobile par rapport au repère WXYZ, lié au porteur. Les rotations de la torche et du détecteur autour de l'axe secondaire O'Z' sont indépendantes. On a désigné sur cette figure par O', T, D et O, les traces dans le plan du joint, de l'axe secondaire Z', de la torche T', du détecteur D' et de l'axe principal OZ. On désignera par $\alpha$ l'angle de rotation de O'O par rapport à l'axe uy parallèle à WY par $\beta_t$ l'angle de rotation de O'T par rapport à OO' et par $\beta_D$ l'angle de rotation de O'D par rapport à OO'.

On définit une droite de référence $\Delta$ de la tête, lorsque $\beta_T = \beta_D = 0$; cette droite de référence correspond à l'alignement de O', T et D, le point T étant confondu avec le point O. Cette droite définit pour chacune des positions successives de la projection de l'axe principal OZ du porteur le long du joint, une direction de référence par rapport à un repère WXYZ.

La direction de référence $\Delta$ est repérée et enregistrée au cours d'une opération préalable d'apprentissage dans laquelle O'T et D étant alignés, le technicien soudeur guide le porteur et oriente la tête de manière que la torche et le détecteur soient constamment sur le joint.

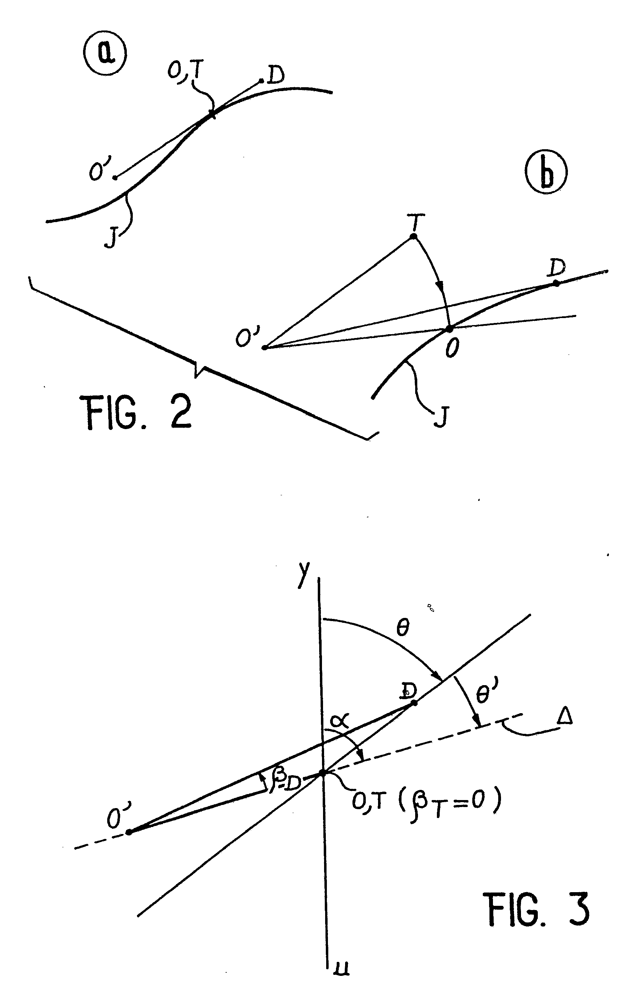

Le repérage de l'angle de la direction de référence $\Delta$, pour chaque position du porteur par rapport à l'axe WY du repère de référence, se fait grâce aux potentiomètres mentionnés plus haut, tandis que l'enregistrement de cet angle se fait dans des moyens qui seront décrits plus loin. Le point T étant confondu avec le point O, la direction de référence est donc la droite OO'. Après cette opération d'apprentissage, le dispositif peut alors fonctionner automatiquement pour souder un joint identique à celui qui a servi à l'opération d'apprentissage. Au cours de ce soudage automatique, le principe de correction de la position de la torche est illustré schématiquement en (a) et (b) sur la fig. 2. Ce principe de correction consiste, comme représenté en (a), à amener la direction de référence O', T, D (O étant confondu avec T) de la tête, sur la tangente en O, au joint J. Ceci peut être réalisé, comme on le verra plus loin en détail, par une rotation générale de la tête A telle que représentée en (b), de manière que la projection T de la torche T' soit bien sur le joint J. Une erreur sur la position de T se traduirait par une erreur sur la direction O'T (droite passant par l'axe secondaire et le point T, dans le plan du joint).

Comme représenté en (b) sur la fig. 2, pour ramener la torche T' sur le joint J, il suffit à l'instant $t_2$ de faire tourner O'T d'un angle TO'O, cet angle est proportionnel à celui dont le détecteur D' avait dû tourner pour trouver le joint J, à un instant $t_1$ précédent l'instant $t_2$ lors du déplacement du porteur P. Sur cette figure, O représente le point réel à souder sur le joint J. (Lorsque le détecteur occupe à l'instant $t_1$ une certaine position en regard du joint, cette position correspond à celle qu'occupera la torche à un instant $t_2$ ultérieur.)

L'intervalle de temps $t_2-t_1$ correspond au rapport de la distance entre la torche et le détecteur lorsque ceux-ci sont alignés sur la direction de référence, à la vitesse d'avance de la torche. Ce rapport est une approximation, mais est justifié car les corrections à effectuer sur la position de la torche sont faibles (petits angles) et lentement variables dans le temps. La distance TD entre la torche et le détecteur lorsque ceux-ci sont alignés sur la direction de référence, est constante.

Il paraît difficile, lors de l'enregistrement, de réunir toutes les conditions qui sont nécessaires aux corrections lors du soudage d'un joint; ces conditions sont les suivantes, lors du soudage: la torche doit être sur le joint et la direction de référence $\Delta$ devrait être sécante au joint en T et D. Ce qu'il est raisonnable d'imposer est que la torche soit sur le joint et que la direction de référence $\Delta$, relevée lors de l'opération d'apprentissage, soit sensiblement tangente au joint, de manière que celui-ci reste dans la zone de capture du détecteur, en avant de la torche. Comme le capteur repère le joint en avance sur la torche, on connaît à l'avance la direction de référence qui devra être utilisée lorsque la torche viendra occuper sur le joint la position détectée préalablement par le détecteur. C'est par rapport à cette direction de référence que le principe de correction de la position de la torche est appliqué.

La fig. 3 représente schématiquement les différents angles qui interviennent dans l'opération automatique de soudage, après l'opération d'apprentissage: l'angle $\theta$ est l'angle que fait la droite passant par T et D à l'instant où le détecteur passe sur le joint, par rapport à la direction uy parallèle à l'axe WY du repère WXYZ. L'angle $\theta'$ est l'angle que fait la direction OD par rapport à la direction de référence $\Delta$; l'angle $\alpha$ est l'angle entre la direction de référence et la direction uy; enfin, $\beta_D$ désigne l'angle entre la direction de référence $\Delta$ et O'D. Les points T et O sont confondus et il en résulte que l'angle $\beta_T$ entre O'T et la direction de référence $\Delta$ est égal à 0.

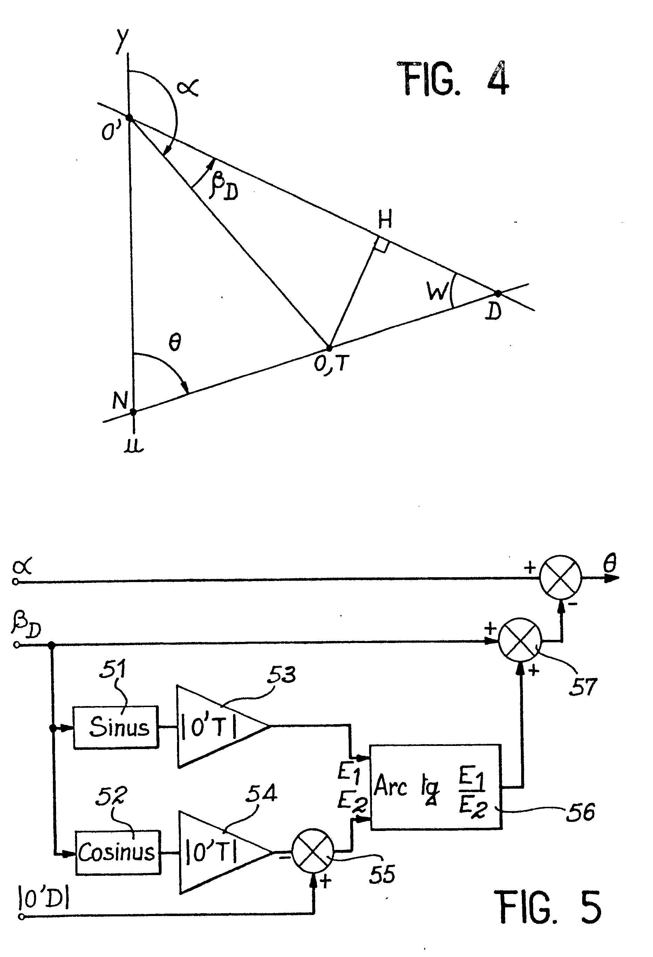

La fig. 4 représente les points O', T et D dans le plan du joint ainsi que les différents angles caractéristiques qui interviennent pour définir l'angle $\theta$ qui est enregistré, puis restitué à la commande de rotation de la tête de soudage, lors de la restitution pour une opération de soudage.

Sur le diagramme de la fig. 4, si on appelle H la projection du point O sur la droite passant par O' et par D, il est possible d'écrire:

$$\theta + \pi - (\alpha - \beta_D) + w = \pi$$

· soit: $\theta = \alpha - \beta_D - w$

$$\text{et } tgw = \frac{HT}{HD} = \frac{O'T \cdot \sin\beta_D}{O'D - O'H} = \frac{O'T \cdot \sin\beta_D}{O'D - O'T \cdot \cos\beta_D}.$$

Il en résulte que:

$$\theta = \alpha - \beta_D - \text{Arc tg} \frac{O'T \cdot \sin\beta_D}{O'D - O'T \cdot \cos\beta_D}.$$

Ainsi, il est possible, connaissant $\alpha$, $\beta_D$, les distances O'T et O'D d'enregistrer la valeur de l'angle $\theta$, lorsque O'T est orienté dans la direction de référence et que le détecteur est sur le joint. Lors de la restitution, cet angle sera celui qui existera entre la direction de référence uy du porteur et la direction OD. On sera alors placé dans les conditions nécessaires à la correction de la position angulaire de la torche, la direction de référence $\Delta$ étant parallèle à la sécante du joint en T et D (comme indiqué plus haut, la direction de référence relevée lors de l'opération d'apprentissage est tangente au joint).

En référence à la fig. 5, on a représenté un circuit permettant d'obtenir la valeur de l'angle $\theta$, en fonction de $\alpha$, $\beta_D$, O'D et O'T, selon le calcul exposé en relation avec la fig. 4. Ce circuit reçoit à ses entrées les valeurs $\alpha$, $\beta_D$, |O'D|. Des moyens 51, 52 constitués de manière connue, permettent d'obtenir les valeurs $\sin\beta_D$ et $\cos\beta_D$, tandis que des circuits multiplicateurs 53, 54 permettent d'obtenir les valeurs O'T $\sin\beta_D$ et O'T $\cos\beta_D$. Le soustracteur 55 permet d'obtenir la valeur O'D-O'T. $\cos\beta_D$. Un circuit 56, constitué de manière connue, permet de calculer le rapport Arc tg $E_1/E_2$, c'est-à-dire le rapport:

$$\text{Arc tg} \cdot \frac{O'T \sin\beta_D}{O'D - O'T \cos\beta_D}.$$

L'additionneur 57 ajoute au résultat obtenu en sortie du circuit 56, la valeur de l'angle $\beta_D$; le circuit soustracteur 58 permet alors d'obtenir la valeur:

$$\theta = \alpha - \beta_D - \text{Arc tg} \frac{O'T \sin\beta_D}{O'D - O'T \cos\beta_D}.$$

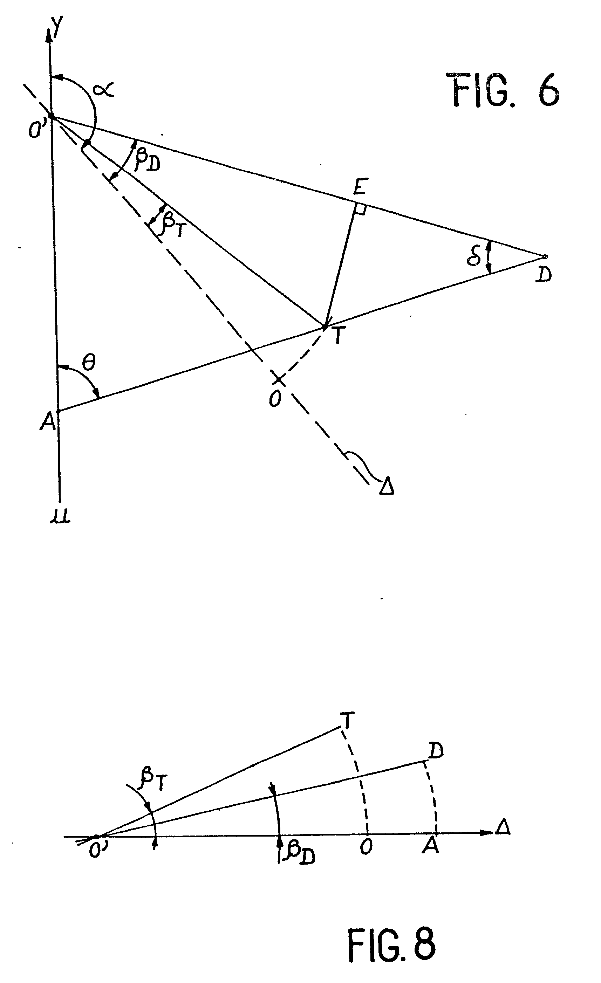

En référence à la fig. 6, on a représenté les angles qui interviennent pour calculer de manière optimale l'angle de correction de la position de la torche. Sur ce diagramme, $\Delta$ est la direction de référence de la tête tandis que E désigne la projection de T sur O'D.

La direction TD obtenue par le calcul précédent n'est qu'une approximation de la direction sécante au joint. En effet, lors de l'apprentissage sur la pièce modèle, les moyens de correction de la position de la torche sont hors service, et la torche, guidée par la main de l'opérateur, peut n'être pas exactement sur le joint. On imagine alors un procédé itératif faisant intervenir une correction de la position de la torche, qui à chaque »passe« permet de réajuster l'orientation de la tête. On peut montrer par les calculs suivants qu'un organe semblable de calcul de $\theta$ peut être utilisé en remplaçant $\beta_D$ par $\beta_D$-$\beta_T$ dans le calcul de l'arc tangent, on va encore être ramené à une expression de la forme $\theta = \alpha + \gamma$ où $\gamma$ sera fonction de O'T, O'D et $\beta_D, \beta_T$.

On a

$$\text{tg}\,\delta = \frac{ET}{ED} \text{ et } ED = \frac{ET}{\text{tg}\,\delta}$$

Dans le triangle O'AD:

$$\pi = \theta + (\pi - \alpha + \beta_D) + \delta \text{ d'où } \delta = \alpha - \theta - \beta_D$$

Comme

$$\sin(\beta_D - \beta_T) = \frac{ET}{O'T}.$$

Il en résulte

$$ET = O'T \sin(\beta_D - \beta_T)$$

donc

$$ED = \frac{ET}{\text{tg}\,\delta} = O'T \sin(\beta_D - \beta_T) \cdot \frac{1}{\text{tg}\,\delta}.$$

Comme

$$O'D = O'E + ED$$

On a:

$$O'D = O'T \sin(\beta_D - \beta_T)/\text{tg}\,\delta + O'T \cos(\beta_D - \beta_T)$$

$$\text{d'où tg}\,\delta = \frac{O'T \cdot \sin(\beta_D - \beta_T)}{O'D - O'T \cdot \cos(\beta_D - \beta_T)}$$

$$\text{d'où: tg}(\alpha - \theta - \beta_D) = \frac{O'T \sin(\beta_D - \beta_T)}{O'D - O'T \cdot \cos(\beta_D - \beta_T)}$$

$$\text{Arc tg} \frac{O'T \cdot \sin(\beta_D - \beta_T)}{O'D - O'T \cos(\beta_D - \beta_T)} = \alpha - \theta - \beta_D$$

et donc:

$$\theta = \alpha + \beta_D - \text{arc tg} \frac{O'T \sin(\beta_D - \beta_T)}{O'D - O'T \cos(\beta_D - \beta_T)}$$

cette expression de $\theta$ est de la forme de celle qui a été calculée précédemment:

$$\theta = \alpha + \beta_D - \text{arc tg} \; \frac{O'T \sin \beta_D}{O'D - O'T \cos \beta_D}.$$

Ce calcul peut être effectué en temps réel par un calculateur analogique du type de celui qui est représenté sur la fig. 5. Ce calculateur reçoit d'une part, la valeur $\beta_D$ de l'angle du détecteur par rapport à la direction de référence $\Delta$ et d'autre part la valeur $\alpha$ de l'angle de la direction de référence O'O de la tête de soudage par rapport à l'axe uy parallèle à l'axe WY du repère lié au porteur.

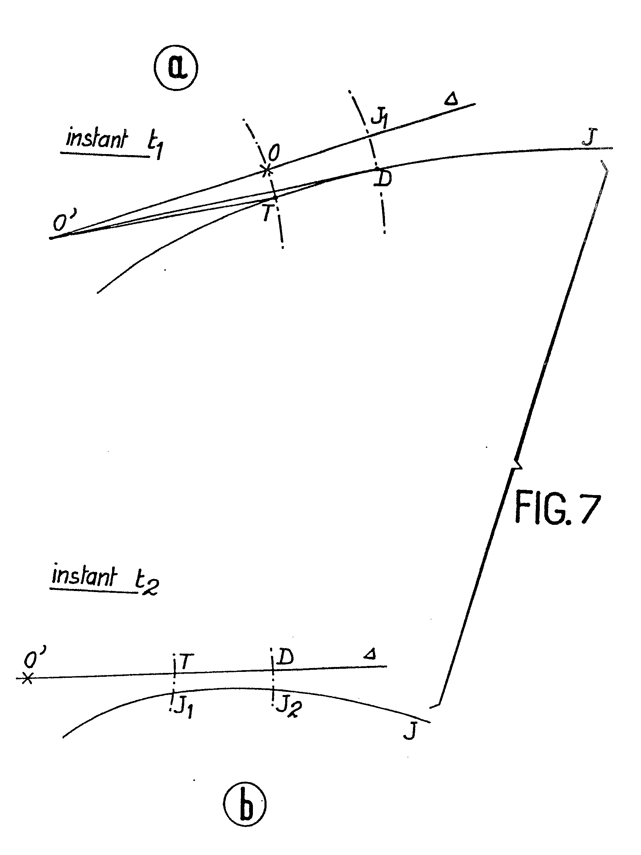

Le principe de correction de la position de la torche en fonction de la vitesse d'avance du porteur est illustré sur les diagrammes (a) et (b) de la fig. 7.

En un point donné, à l'instant $t_2$, il est effectué sur la torche une correction d'une distance égale à la distance $DJ_1$ (joint-direction de référence $\Delta$) qui avait été mesurée par le détecteur quand celui-ci était passé sur le même point à l'instant $t_1$ (fig. 7 (a)).

A l'instant $t_2$, la distance joint-direction de référence, sur la trajectoire de la torche, obéit à la relation: $TJ_1 = DJ_1$.

Donc, en connaissant la valeur de la vitesse et les dimensions O'T et O'D, il est possible de connaître l'instant où doit être effectuée la correction de position de la torche, à partir du moment où cette donnée d'écart a été enregistrée par le détecteur.

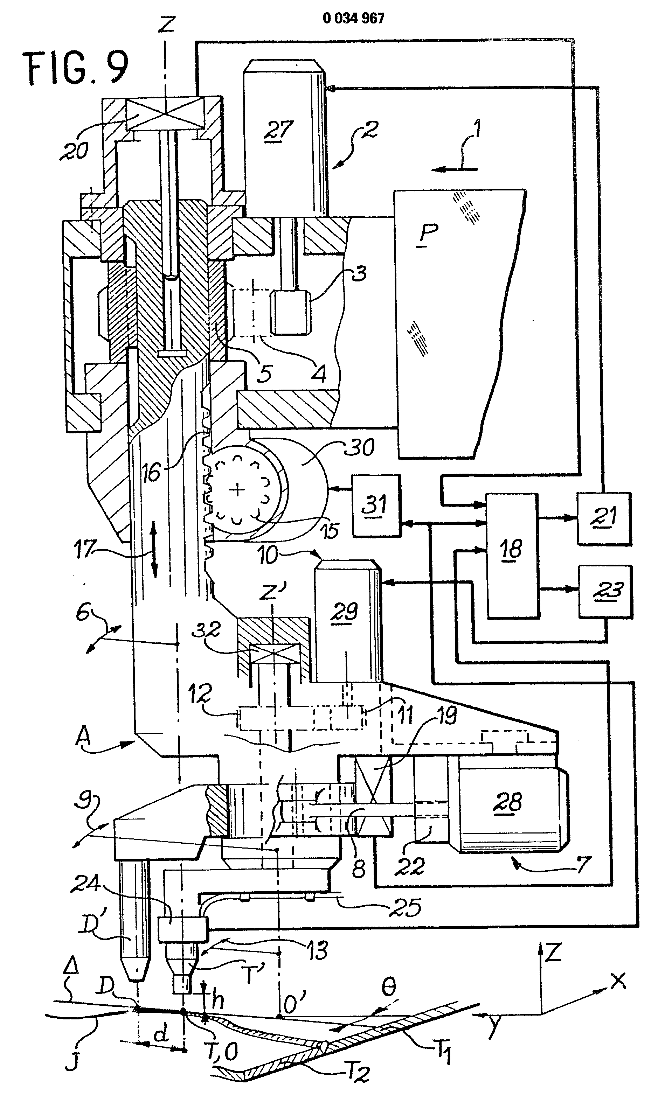

Si les angles sont petits, tels que représentés sur la fig. 8, il est possible, pour calculer l'angle $\beta_T$ de correction de la position de la torche, d'écrire $\overline{DA} = \overline{OT}$ et par suite

$$\beta_T = \beta_D \times \frac{O'D}{O'T}.$$

En référence à la fig. 9, on a représenté, de manière plus détaillée, un dispositif automatique, conforme à l'invention, permettant le soudage d'un joint J entre deux surfaces $T_1$ et $T_2$ constituées par exemple par des tôles à souder. Ce dispositif comprend un porteur P, mobile le long du joint à souder, et supportant une tête de soudage A; cette tête de soudage comprend une torche T' apte à produire un arc électrique, et un détecteur D' de type tique par exemple, qui permet de détecter la présence du joint à chaque fois que ce détecteur et ce joint se trouvent en regard l'un de l'autre. Il est bien évident que ce détecteur pourrait être électromécanique ou magnétique. La tête de soudage A est mobile en rotation autour de l'axe principal OZ, lié au porteur P, et sensiblement perpendiculaire aux surfaces $T_1$, $T_2$. Le détecteur D' et la torche T' sont mobiles en rotation autour de l'axe secondaire O'Z', lié à la tête et parallèle à l'axe principal OZ. La disposition de la torche est telle qu' au cours de sa rotation autour de l'axe secondaire O'Z', cette torche passe par l'axe principal OZ. Durant le déplacement du porteur dans le sens de la flèche 1, par exemple, le détecteur est situé en avant de la torche. Le système comprend aussi des moyens 2 pour faire tourner la tête A autour de l'axe principal OZ; ces moyens sont constitués par exemple par un moteur électrique 27, entraînant un système de pignons 3, 4, 5, de manière que la tête puisse tourner autour de l'axe OZ, dans l'un des sens indiqués par la double flèche 6. Des moyens 7, constitués par un moteur électrique 28 commandent une bielle 8 par l'intermédiaire d'un système connu 22, permettant de transformer le mouvement rotatif du moteur en un mouvement oscillatoire qui amène le détecteur D' à balayer le joint J par rotation autour de l'axe secondaire O'Z', lié à la tête A. Les oscillations du détecteur autour de l'axe O'Z', sont représentées par la double flèche 9. De la même manière des moyens 10, constitués par le moteur 29 entraînant les engrenages 11, 12, permettent de commander la rotation de la torche autour de l'axe secondaire O'Z', dans l'un des sens indiqués par la double flèche 13, de manière à amener cette torche en regard du joint J. Enfin, des moyens constitués par le moteur électrique 30, entraînant le pignon 15 associé à la crémaillère 16, permettent de déplacer la tête A en translation le long de l'axe principal OZ, selon l'un des sens de la double flèche 17.

Des moyens 18, liés au détecteur D', permettent d'enregistrer avant soudage, les positions du porteur et la direction de référence $\Delta$ de la tête le long du joint, par rapport au repère fixe WXYZ, les points O'T et D étant alignés et les points T et D étant sur le joint. Ce système de détection est décrit en détail dans le brevet FR-A-2 475 720 au nom du même demandeur. La direction de référence $\Delta$ de la tête par rapport au repère fixe WXYZ est enregistrée avant soudage par les moyens d'enregistrement 18 de la manière suivante: à chaque fois que le détecteur D' passe en regard du joint et que la torche est aussi en regard du joint, les points O', T et D étant alignés, l'angle $\alpha$ que fait la direction de référence avec l'axe uy, est enregistré par les moyens 18. Dans ce cas, $\alpha$ est d'ailleurs égal à $\theta$. Cet angle est repéré grâce à des moyens 20 de détection de la position angulaire de la tête A, par rapport à l'axe de référence WY; ces moyens de détection ne sont pas ici décrits en détail, ils peuvent être constitués par exemple, par un détecteur potentiométrique ou par tout autre type de codeur angulaire. Au cours du soudage, l'angle du détecteur avec la direction de référence $\Delta$, est repéré par des moyens 19 de détection de position angulaire, comparables aux moyens de repérage 20. Ainsi, avant soudage, dans les moyens 18 sont enregistrés, d'une part, les différentes positions du porteur le long du joint, et d'autre part, les angles $\alpha$ de référence, que fait la direction $\Delta$ de référence de la tête, pour chacune de ces positions, par rapport à l'axe WY du repère fixe WXYZ. Cet angle $\alpha$ est calculé par des moyens comparables à ceux de la fig. 5 et associés aux moyens 18. Les moyens 19 qui permettent de détecter la position angulaire du détecteur sont reliés par exemple à la bielle 8.

Les données de position du porteur et d'angle de référence de la tête sont bien entendu restituées par les moyens d'enregistrement 18, aux moyens non représentés qui commandent le déplacement du porteur et au moteur 27 commandant la rotation de la tête A, d'un angle $\alpha$. Le dispositif comprend des moyens 23 liés aux moyens d'enregistrement 18 qui permettent de corriger, par action sur le moteur 29 d'entraînement de la torche en rotation, la position angulaire de celle-ci par rapport à la direction de référence préenregistrée, de manière à amener la torche au-dessus du joint J en cours de soudage. Enfin, le dispositif comprend des moyens qui permettent de déterminer la vitesse du porteur au cours du soudage; la détermination de cette vitesse est importante pour déterminer le retard avec lequel doit être effectuée la correction de position de la torche; ces moyens sont, dans l'exemple de réalisation décrit, constitués par des moyens de mesure 24 du courant d'arc de la torche T' dont l'alimentation électrique a été représentée en 25. Ces moyens pourraient être de type mécanique ou électromécanique. Des moyens connus, 31, permettent d'asservir la tension de commande du moteur 30 qui agit sur le mouvement de translation de la tête A, à la tension d'arc, de manière à obtenir un arc électrique de hauteur h constante. Les moyens 23 comprennent notamment un circuit d'échantillonnage, non représenté qui permet de valider l'enregistrement de la position $\beta_D$ du détecteur lorsque celui-ci est au-dessus du joint et de mémoriser l'angle $\beta_T$ correspondant à la correction à effectuer sur la torche après le temps $\Delta T$ nécessaire au porteur pour parcourir la distance d. C'est à la fin de l'intervalle de temps $\Delta T$ que les moyens de correction 23 appliquent à la torche la rotation $\beta_T$. Ceci est rendu possible par le fait que la vitesse V du porteur, proportionelle au courant de la torche obéit à la relation $V = \dfrac{d}{\Delta T}$ et qu'il en résulte que $\Delta T$ (durée de mémorisation de $\beta_T$) égale $\dfrac{d}{V}$ Il est évident que la hauteur d'arc h pourrait être repérée à partir de la tension d'arc par un autre moyen même mécanique, détecteur de proximité, par exemple, permettant l'asservissement du moteur 30.

**Revendications**

1. Procédé automatique et autoadaptatif de soudage d'un joint (J) par fusion à l'aide d'une tête de soudage (A) qui comprend un détecteur de joint (D') et une torche (T') et qui est supportée par un porteur mobile (P), le long du joint, cette tête de soudage étant mobile, d'une part, en rotation autour d'un axe principal (OZ) du porteur (P) cet axe étant sensiblement perpendiculaire au plan tangent aux surfaces ($T_1$, $T_2$) à souder à l'endroit du joint et, d'autre part, mobile en translation le long de cet axe principal, le torche (T') et le détecteur (D') étant mobiles en rotation autour d'un axe secondaire (O'Z') lié à la tête (A) et parallèle à l'axe principal, la torche (T') pouvant passer par l'axe principal (OZ) au cours de la rotation autour de l'axe secondaire (O'Z'), le détecteur (D') étant en avance par rapport à la torche (T') durant le déplacement du porteur (P), ce procédé consistant:

— à enregistrer, lors d'une opération d'apprentissage, préliminaire au soudage en série, pendant laquelle les axes précités (OZ, O'Z') ainsi que les axes de la torche et du detecteur sont dans un même plan, les positions successives de la projection de l'axe principal du porteur (P), le long du joint (J), par rapport à un repère WXYZ,
— à déterminer pour chacune de ces positions au cours de cette opération d'apprentissage la direction d'une droite de référence ($\Delta$) définie par les deux points d'intersection de l'axe de la torche (T') et de l'axe du détecteur (D'), avec la trace du joint (J) sur les surfaces des pièces à assembler, et à enregistrer une tension électrique correspondant à la position angulaire ($\theta$) de cette direction de référence par rapport au repère WXYZ,
— à mesurer au cours du soudage et pour chaque position de l'axe principal (OZ) du porteur (P), l'angle ($\beta_D$) du détecteur, par rapport à la direction de la droite de référence ($\Delta$), lorsque le détecteur est au-dessus du joint (J),
— à corriger, au cours du soudage, la position angulaire de la torche (T'), lorsque celle-ci vient occuper la position qu'avait précédemment le détecteur (D'), par un déplacement angulaire qui est fonction d'une part, de l'écart angulaire ($\beta_D$) du détecteur (D') par rapport à la droite de référence ($\Delta$) correspondante en ce point du joint (J) et, d'autre part, de la vitesse de déplacement de la tête (A) sur sa trajectoire.

2. Procédé selon la revendication 1, caractérisé en ce que la vitesse de déplacement du porteur (P) est déterminée à partir de l'intensité du courant de soudage.

3. Procédé selon la revendication 1, caractérisé en ce que l'on asservit en permanence la hauteur de la torche (T') au-dessus du joint (J), à la tension d'arc.

4. Procédé selon la revendication 1, caractérisé en ce que la hauteur de la torche (T') au-dessus du joint (J) est réglée par une détection de proximité.

5. Dispositif automatique et autoadaptatif de soudage d'un joint par fusion, comprenant une tête de soudage (A) munie d'une torche (T') supportée par un porteur (P) mobile le long du joint (J) à souder, caractérisé en ce qu'il comprend un détecteur de joint (D') faisant partie de la tête (A) de soudage, cette tête étant d'une part, mobile en rotation autour d'un axe principal (OZ) du porteur, cet axe étant sensiblement perpendiculaire au plan tangent aux surfaces (T1, T2) à souder le long du joint (J) et, d'autre part, mobile en translation le long de cet axe principal, le détecteur de joint (D') et la torche (T') étant mobiles en rotation autour d'un axe secondaire (O'Z') lié à la tête (A) et parallèle à l'axe principal (OZ), la torche pouvant passer par l'axe principal au cours de sa rotation autour de l'axe secondaire (O'Z') et le détecteur (D') étant en avance par rapport à la torche (T'), durant le déplacement du porteur (P), des moyens (18) reliés à la tête, à la torche et au détecteur pour mesurer et enregistrer durant une opération d'apprentissage pendant laquelle les axes précités (OZ, O'Z') ainsi que les axes de la torche (T') et du détecteur (D') sont dans un même plan, des tensions électriques correspondant aux positions successives de la projection de l'axe principal du porteur le long du joint (J), par rapport à un repère WXYZ, ces moyens de mesure et d'enregistrement étant aussi aptes à repérer pour chacune de ces positions, au cours de cette opération d'apprentissage la direction d'une droite de référence ($\Delta$) définie par les deux points d'intersection de l'axe de la torche (T') et de l'axe du détecteur (D'), avec la trace du joint (J) sur les surfaces des pièces à assembler, et à enregistrer une tension électrique correspondant à la position angulaire ($\theta$) de cette direction de référence par rapport au repère WXYZ, puis à mesurer et enregistrer au cours du soudage et pour chaque position de l'axe principal (OZ) du porteur (P), l'angle ($\beta_D$) du détecteur, par rapport à la direction de la droite de référence ($\Delta$) lorsque le détecteur est au-dessus du joint (J) et des moyens (23, 29) pour corriger, en cours de soudage, la position angulaire de la torche (T') par rapport à sa droite de référence ($\Delta$) correspondante, lorsque la torche vient occuper la position qu'avait précédemment le détecteur le long du joint (J), cette correction étant un déplacement angulaire de la torche amenant celle-ci sur le joint, et étant fonction de la vitesse de déplacement de la tête sur sa trajectoire ainsi que de l'écart angulaire ($\beta_D$) du détecteur (D') par rapport à la droite de référence ($\Delta$) correspondante.

6. Dispositif automatique de soudage selon la revendication 5, caractérisé en ce qu'il comprend en outre des moyens (2, 30) pour faire tourner la tête autour de l'axe principal (OZ), selon les angles de référence correspondant aux positions du porteur (P) et pour déplacer la tête en translation le long de cet axe.

7. Dispositif automatique de soudage selon la revendication 5, caractérisé en ce qu'il comprend en outre des moyens (29) pour amener le détecteur (D') au-dessus du joint (J) pendant l'opération d'apprentissage et au cours du soudage, par rotation autour de l'axe secondaire (O'Z') de la tête, et des moyens (19) pour mesurer la position angulaire du détecteur (D') par rapport à sa droite de référence.

8. Dispositif automatique de soudage selon la revendication 5, caractérisé en ce que les moyens pour corriger la position de la torche comprennent des moyens (29) pour commander sa rotation autour de l'axe secondaire, à partir des tensions correspondant aux positions du détecteur lorsqu'il est sur le joint (J) et à partir de la vitesse de la tête sur sa trajectoire.

9. Dispositif automatique de soudage selon la revendication 8, caractérisé en ce qu'il comprend en outre des moyens pour mesurer la vitesse de déplacement du porteur (P) le long du joint (J).

10. Dispositif automatique de soudage selon la revendication 9, caractérisé en ce que les moyens de mesure de la vitesse du porteur sont constitués par des moyens de mesure du courant de soudage.

11. Dispositif automatique des soudage selon la revendication 9, caractérisé en ce que les moyens (23, 29) pour commander la rotation de la torche autour de l'axe secondaire (O'Z') sont asservis par les moyens de mesure de vitesse de déplacement du porteur.

12. Dispositif automatique de soudage selon la revendication 11, caractérisé en ce qu'il comprend en outre des moyens (30, 31) pour régler la hauteur de la torche au-dessus du joint.

13. Dispositif automatique de soudage selon la revendication 12, caractérisé en ce que les moyens pour régler la hauteur de la torche comprennent des moyens (31) pour déplacer la tête en translation le long de l'axe principal, asservis par des moyens de mesure de la tension d'arc (25) ou par des moyens de détection de proximité.

14. Dispositif automatique de soudage selon l'une quelconque des revendications 1 à 13, caractérisé en ce que le détecteur (D') est un détecteur optique.

15. Dispositif selon l'une quelconque des revendications 1 à 13, caractérisé en ce que le détecteur (D') est un détecteur électrique.

16. Dispositif selon la revendication 15, caractérisé en ce que le détecteur (D') est un détecteur à courants de Foucault à balayage alternatif.

## Patentansprüche

1. Automatisches und selbstanpassendes Verfahren zum Fusionsschweißen einer Naht (J) mittels eines Schweißkopfs (A), welcher einen Nahtfugendetektor (D') und einen Brenner (T') aufweist und von einem entlang der Nahtfuge bewegbaren Träger (P) gehalten ist, so daß der Schweißkopf einerseits um eine sich im wesentlichen lotrecht zu einer die zu schweißenden Oberflächen (T₁, T₂) im Bereich der Nahtfuge tangierenden Ebene erstreckende Hauptachse (OZ) verdrehbar und andererseits entlang der Hauptachse verschiebe-beweglich ist, wobei der Brenner (T') und der Detektor (D') um eine mit dem Kopf (A) verbundene und zur Hauptachse parallele Sekundärachse (O'Z') verdrehbar sind, so daß der Brenner (T') bei der Drehung um die Sekundärachse (O'Z') die Hauptachse (OZ) passieren kann und der Detektor (D') dem Brenner (T') während der Bewegung des Trägers (P) voreilt, und wobei das Verfahren darin besteht,

daß im Verlauf eines dem Schweißen in Serienfertigung vorausgehenden Zurüstvorgangs, während dessen die genannten Achsen (OZ, O'Z') sowie die Achsen des Brenners und des Detektors in einer gemeinsamen Ebene verlaufen, die aufeinander folgenden Stellungen der Projektion der Hauptachse des Trägers (P) entlang der Nahtfuge (J) relativ zu einem Bezugssystem WXYZ registriert werden,

daß im Verlauf des Zurüstvorgangs für jede dieser Stellungen die Richtung einer durch die beiden Schnittpunkte der Achse des Brenners (T') und der Achse des Detektors (D') mit der vorgezeichneten Nahtfuge (J) auf den Oberflächen der miteinander zu verbindenden Teile bestimmten Bezugsgeraden ($\Delta$) bestimmt und eine der Winkelstellung der Bezugsgeraden relativ zum Bezugssystem WXYZ entsprechende elektrische Spannung registriert wird,

daß im Verlauf des Schweißens für jede Stellung der Hauptachse (OZ) des Trägers (P) der Winkel ($\beta_D$) des Detektors in bezug auf die Richtung der Bezugsgeraden ($\Delta$) gemessen wird,

und daß während des Schweißens die Winkelstellung des Brenners (T'), wenn dieser sich an der zuvor vom Detektor (D') eingenommenen Stellung befindet, durch eine Winkelverstellung korrigiert wird, welche eine Funktion einerseits des Winkelabstands ($\beta_D$) des Detektors in bezug auf die diesem Punkt der Nahtfuge (J) entsprechenden Bezugsgeraden ($\Delta$) und andererseits der Bewegungsgeschwindigkeit des Kopfs (A) entlang seiner Bewegungsbahn ist.

2. Verfahren nach Anspruch 1, dadurch gekennzeichnet, daß die Bewegungsgeschwindigkeit des Trägers (P) in Abhängigkeit von der Stärke des Schweißstroms bestimmt wird.

3. Verfahren nach Anspruch 1, dadurch gekennzeichnet, daß die Höhe des Brenners (T') über der Nahtfuge (J) und die Spannung des Lichtbogens ständig überwacht werden.

4. Verfahren nach Anspruch 1, dadurch gekennzeichnet, daß die Höhe des Brenners (T') über der Nahtfuge (J) unter Annäherungsabtastung gesteuert wird.

5. Automatische und selbstanpassende Vorrichtung zum Fusionsschweißen einer Naht, mit einem mit einem Brenner (T') bestückten Schweißkopf (A), welcher von einem entlang der zu schweißenden Naht (J) bewegbaren Träger (P) getragen ist, gekennzeichnet durch einen zum Schweißkopf (A) gehörigen Schweißnahtdetektor (D') sowie dadurch, daß der Schweißkopf einerseits um eine Hauptachse (OZ) des Trägers herum bewegbar ist, welche im wesentlichen lotrecht zu einer die zu verschweißenden Flächen (T1, T2) entlang der Schweißnaht (J) tangierenden Ebene verläuft, und andererseits entlang der Hauptachse verschiebe-beweglich ist, daß der Schweißnahtdetektor (D') und der Brenner (T') um eine dem Kopf (A) zugeordnete und zur Hauptachse (OZ) parallele Sekundärachse (O'Z') herum bewegbar sind, so daß der Brenner bei seiner Bewegung um die Sekundärachse (O'Z') herum die Hauptachse passieren kann und der Detektor (D') bei der Verschiebebewegung des Trägers (P) gegenüber dem Brenner (T') voreilt, daß mit dem Kopf, dem Brenner und dem Detektor verbundene Einrichtungen (18) dazu dienen, während eines Zurüstvorgangs, während dessen die vorgenannten Achsen (OZ, O'Z') sowie die Achsen des Brenners (T') und des Detektors (D') in einer gemeinsamen Ebene liegen, aufeinander folgenden Stellungen der Projektion des Hauptachse des Trägers entlang der Schweißnaht (J) in bezug auf ein Bezugssystem (WXYZ) entsprechende elektrische Spannungen zu messen und zu registrieren und ebenfalls während des Zurüstvorgangs für jede dieser Stellungen die Richtung einer durch die Schnittpunkte der Achse des Brenners (T') und der Achse des Detektors (D') mit der auf den miteinander zu verbindenden Teilen vorgezeichneten Schweißnaht hindurch verlaufenden Bezugsgeraden zu bestimmen und eine der Winkelstellung ($\theta$) dieser Bezugsrichtung in bezug auf das Bezugssystem (WXYZ) entsprechende elektrische Spannung zu registrieren und ferner während des Schweißvorgangs für jede Stellung der Hauptachse (OZ) des Trägers (P) die Winkelstellung ($\beta_D$) des Detektors in bezug auf die Richtung der Bezugsgeraden ($\Delta$) zu messen und zu registrieren, wenn sich der Detektor über der Schweißnaht (J) befindet, und ferner gekennzeichnet durch Einrichtungen (23, 29) zum Korrigieren der Winkelstellung des Brenners (T') während des Schweißens in bezug auf die jeweilige Bezugsgerade, wenn sich der Brenner in der zuvor dem Detektor eingenommenen Stellung entlang der Schweißnaht (J) befindet, wobei diese Korrektion eine den Brenner in eine Stellung über der Schweißnaht bringende Winkelbewegung ist und eine Funktion der Bewegungsgeschwindigkeit des Kopfs entlang seiner Bewegungsbahn sowie des Winkelabstands ($\beta_D$) des Detektors (D') in bezug auf die jeweilige Bezugsgerade ($\Delta$) ist.

6. Schweißvorrichtung nach Anspruch 5 ferner gekennzeichnet durch Einrichtungen (2, 30) zum Verdrehen des Kopfs um die Hauptachse (OZ) entsprechend den den Stellungen des Trägers (P) zugeordneten Bezugswinkeln und zum Verschieben des Kopfs entlang dieser Achse.

7. Automatische Schweißvorrichtung nach Anspruch 5, ferner gekennzeichnet durch Einrichtungen (29) zum Ausrichten des Detektors (D') über der Schweißnaht (J) während des Zurüstvorgangs und während des Schweißvorgangs durch Drehung um die Sekundärachse (O'Z') des Kopfs, und durch Einrichtungen (19) zum Messen der Winkelstellung des Detektors (D') in bezug auf seine Bezugsgerade.

8. Automatische Schweißvorrichtung nach Anspruch 5, dadurch gekennzeichnet, daß die Einrichtungen zum Korrigieren der Stellung des Brenners eine Einrichtung (29) zum Drehen desselben um die Sekundärachse in Abhängigkeit von den Stellungen des Detektors, wenn dieser sich über der Schweißnaht (J) befindet, entsprechenden Spannungen und in Abhängigkeit von der Geschwindigkeit des Kopfs entlang seiner Bewegungsbahn aufweisen.

9. Automatische Schweißvorrichtung nach Anspruch 8, ferner gekennzeichnet durch Einrichtungen zum Messen der Bewegungsgeschwindigkeit des Trägers (J) entlang der Schweißnaht (J).

10. Automatische Schweißvorrichtung nach Anspruch 9, dadurch gekennzeichnet, daß die Einrichtungen zum Messen der Geschwindigkeit des Trägers durch Einrichtungen zum Messen des Schweißstroms gebildet sind.

11. Automatische Schweißvorrichtung nach Anspruch 9, dadurch gekennzeichnet, daß die Einrichtungen (23, 29) zum Verdrehen des Brenners um die Sekundärachse (O'Z') herum durch die Einrichtungen zum Messen der Bewegungsgeschwindigkeit des Trägers gesteuert sind.

12. Automatische Schweißvorrichtung nach Anspruch 11, ferner gekennzeichnet durch Einrichtungen (30, 31) zum Regeln der Höhe des Brenners über der Schweißnaht.

13. Automatische Schweißvorrichtung nach Anspruch 12, dadurch gekennzeichnet, daß die Einrichtungen zum Regeln der Höhe des Brenners eine Einrichtung (31) zum Verschieben des Kopfs entlang der Hauptachse aufweisen, welche durch Einrichtungen zum Messen des Spannung des Lichtbogens (25) oder durch Annäherungs-Sensoreinrichtungen gesteuert ist.

14. Automatische Schweißvorrichtung nach einem der Ansprüche 1 bis 13, dadurch gekennzeichnet, daß der Detektor (D') ein optischer Detektor ist.

15. Vorrichtung nach einem der Ansprüche 1 bis 13, dadurch gekennzeichnet, daß der Detektor (D') ein elektrischer Detektor ist.

16. Vorrichtung nach Anspruch 15, dadurch gekennzeichnet, daß der Detektor (D') ein Wirbelstromdetektor mit alternierender Abtastung ist.

## Claims

1. Automatic self-adaptive process for fusion welding of a joint (J) by means of a welding head (A) which comprises a joint-detector (D') and a torch (T') and which is supported by a carrier (P), movable longitudinally of the joint, said welding head being, on the one hand, rotatable around a principal axis (OZ) of the carrier (P), said axis being substantially perpendicular to a plane tangential to the surfaces $(T_1, T_2)$ to be welded by the joint, and on the other hand, movable longitudinally with respect to the said principal axis, the torch (T') and the detector (D') being rotatable around a secondary axis (O'Z') linked with the head (A) and parallel to the principal axis, the torch (T') passing through the principal axis (OZ) in the course of its rotation around the secondary axis (O'Z'), the detector (D') being ahead of the torch (T') during movement of the carrier (P), said process comprising:

— registering successive positions of projection of the principal axis (P) of the carrier, longitudinally of the joint (J), with respect to a coordinate system WXYZ, in the course of a learning operation preliminary to a series of welds, during which the above-mentioned axes (OZ, O'Z'), and thus the axes of the torch and the detector, are in the same plane,
— determining, for each of these positions in the course of the learning operation, the direction of a reference line ($\Delta$) defined by the two intersection points of the axis of the torch (T') and the axis of the detector (D') with the line of the joint (J) on the surfaces of the bodies to be welded, and registering the electric potential corresponding to the angular position ($\theta$) of said reference direction with respect to the coordinate system WXYZ,
— measuring, during the course of welding and for each position of the principal axis (OZ) of the carrier (P), the angle ($\beta_\delta$) of the detector, with respect to the reference line ($\Delta$), when the detector is above the joint (J), and
— correcting, during the course of welding, the angular position of the torch (T') when it comes to occupy the position previously occupied by the detector (D'), by an angular displacement which is a function, on the one hand of the angular offset ($\beta_\delta$) of the detector (D') with respect to the reference line ($\Delta$) corresponding to that point of the joint (J) and, on the other hand, to the speed of movement of the head (A) on its path.

2. Process according to claim 1, characterized in that the speed of displacement of the carrier (P) is determined by the intensity of the welding current.

3. Process according to claim 1, characterized in that the height of the torch (T') above the joint (J), is permanently governed by the tension of the arc.

4. Process according to claim 1, characterized in that the height of the torch (T') above the joint (J), is regulated by a proximity-detector.

5. Automatic self-adaptive apparatus for fusion welding of a joint (J), comprising a welding head (A) having a torch (T') supported by a carrier (P) movable longitudinally of the joint (J) to be welded, characterized in that it comprises a joint-detector (D') forming part of the welding head (A), said head being, on the one hand, rotatable around a principal axis (OZ) of the carrier, said axis being substantially perpendicular to a plane tangential to the surfaces $(T_1, T_2)$ to be welded by the joint (J) and, on the other hand, movable longitudinally with respect to the said principal axis, the joint-detector (D') and the torch (T') being rotatable around a secondary axis (O'Z'), linked with the head (A) and parallel to the principal axis (OZ), the torch passing through the principal axis in the course of its rotation around the secondary axis (O'Z'), and the detector (D') being ahead of the torch (T'), during movement of the carrier (P), means (18) connected to the head, the torch, and the detector, to measure and register, during a learning operation during which the above-mentioned axes (OZ, O'Z') as well as the axes of the torch (T') and the detector (D') are in the same plane, the electric tensions corresponding to successive positions of the projection of the principal axis of the carrier lengthways of the joint, with respect to a coordinate system WXYZ, said measurement and registration means being also adapted fo fix for each of said positions, in the course of said learning operation, the direction of a reference line ($\Delta$) defined by the two intersection points of the axis of the torch (T') and the axis of the detector (D') with the line of the joint (J) on the surfaces of the bodies to be welded, and to register an electric tension corresponding to the angular position ($\theta$) of said reference line with respect to the coordinate system WXYZ, then to measure and register, during the course of welding and for each position of the principal axis (OZ) of the carrier (P), the angle ($\beta_o$) of the detector, with respect to the direction of the reference line ($\Delta$) when the detector is above the joint (J), and means (23, 29) for correcting, during the course of welding, the angular position of the torch (T') with respect to its corresponding reference line ($\Delta$), when the torch comes to occupy the position previously occupied by the detector longitudinally of joint (J), said correction being an angular displacement of the torch bringing it above the joint, and being a function of the speed of movement of the head on its path as well as the angular offset ($\beta_o$) of the detector (D') with respect to the corresponding reference line ($\Delta$).

6. Automatic welding apparatus according to claim 5, characterized in that it additionally comprises means (2, 30) for rotating the head around the principal axis (OZ), according to reference angles corresponding to positions of the carrier (P) and to move the head longitudinally of said axis.

7. Automatic welding apparatus according to claim 5, characterized in that it additionally comprises means (29) for bringing the detector (D') above the joint (J) during the learning operation and during welding, by rotation around the secondary axis (O'Z') of the head, and means (19) for measuring the angular position of the detector (D') with respect to the reference line ($\Delta$).

8. Automatic welding apparatus according to claim 5, characterized in that the means for correcting the position of the torch comprise means (29) for controlling its rotation around the secondary axis, on the basis of tensions corresponding to positions of the detector when it is above the joint (J) and of the speed of the head on its path.

9. Automatic welding apparatus according to claim 8, characterized in that it additionally comprises means for measuring the speed of movement of the carrier (P) longitudinally of the joint (J).

10. Automatic welding apparatus according to claim 9, characterized in that the means for measuring the speed of the head comprise means for measuring the welding current.

11. Automatic welding apparatus according to claim 9, characterized in that the means (23, 29) for controlling rotation of the torch around the secondary axis (O'Z') are governed by the means for measuring the speed of movement of the carrier.

12. Automatic welding apparatus according to claim 11, characterized in that it additionally comprises means (30, 31) for controlling the height of the torch above the joint.

13. Automatic welding apparatus according to claim 12, characterized in that the means for controlling the height of the torch comprise means (31) for moving the head longitudinally of the principal axis, governed by means for measuring the tension of the arc (25), or by proximity detection means.

14. Automatic welding apparatus according to any one of claims 5 to 13, characterized in that the detector (D') is an optical detector.

15. Apparatus according to any one of claims 5 to 13, characterized in that the detector (D') is an electrical detector.

16. Apparatus according to claim 15, characterized in that the detector (D') is an alternately-scanning Foucault current-detector.

FIG. 1

FIG. 2

FIG. 3

FIG. 4

FIG. 5

FIG. 6

FIG. 8

FIG.7

0 034 967

(a)

instant $t_1$

(b)

instant $t_2$

21

FIG. 9

0 034 967

23